# EUROPÄISCHE PATENTSCHRIFT

(11) **EP 0 555 765 B1**
(45) Veröffentlichungstag und Bekanntmachung des Hinweises auf die Patenterteilung: **11.12.1996**
(21) Anmeldenummer: 93101703.2
(22) Anmeldetag: 04.02.1993
(51) Int. Cl.: G01G 11/00, G01G 13/02

(54) **Abfüllwaage**
Filling balance
Balance de remplissage

(30) Priorität: 11.02.1992 DE 4203883
(43) Veröffentlichungstag der Anmeldung: 18.08.1993
(73) Patentinhaber: Optima-Maschinenfabrik Dr. Bühler GmbH & Co., 74523 Schwäbisch Hall (DE)
(72) Erfinder: Braun, Thomas, D-7170 Schwäbisch-Hall (DE); Gwinner, Werner, D-7172 Rosengarten (DE)
(74) Vertreter: Patentanwälte Ruff, Beier, Schöndorf und Mütschele

(56) Entgegenhaltungen:
- EP-A- 0 256 222
- DE-A- 2 015 048
- DE-A- 3 100 577

## Beschreibung

Die Erfindung betrifft eine Einrichtung zur Produktflußeinstellung für eine Abfüllwaage.

In Abfüllwaagen ist eine Produktzuführung vorhanden, in der mit Hilfe eines verstellbaren Schiebers ein Produktfluß eingestellt werden kann. Der einzustellende Produktfluß hängt unter anderem von dem abzufüllenden Material ab.

Bislang sind dabei Linearschieber bekannt, die beispielsweise ein ebenes Blech aufweisen, das in seiner eigenen Längsrichtung verstellbar befestigt ist. Die der festen Wand gegenüberliegende, meistens untere Kante dieses Schiebers bestimmt dabei den Querschnitt des Durchgangs. Je näher man den Schieber an die feste Wand heranschiebt, desto geringer wird der Durchfluß bzw. die Produktschichthöhe. Jedoch ändert sich bei Verstellung des Schiebers der Winkel zwischen dem Schieber und der festen Wand nicht. Wenn eine automatische Verstelleinrichtung verwendet werden soll, so kann dies bei den bekannten Schiebern zu Problemen führen. Aufgrund des hohen Produktdrucks kann es zum Verkanten der Linearführung und damit zur Schwergängigkeit führen. Zum anderen kann bei der Linearverstellung, die im Produktstrom liegt, bei klebrigen oder aggressiven Materialien eine Ablagerung auftreten, die ebenfalls die Verstellung schwergängig macht.

Es ist bereits eine Durchlaufwaage zum Erfassen des Durchsatzes von in einer Getreidemühle verarbeiteten schüttbaren Nahrungsmitteln bekannt (EP-A-0 256 222). Bei dieser Waage kann mit Hilfe eines Dosierelements eine gewünschte Durchsatzleistung eines kontinuierlichen Schüttgutstroms voreingestellt werden. Das Dosierelement ist eine Drehklappe, bei der die Drehachse unterhalb der Klappe angeordnet ist.

Der Erfindung liegt die Aufgabe zugrunde, die Produktflußeinstellung derart zu verbessern, daß sie leichtgängiger ist und die Produktflußeigenschaften verbessert werden.

Zur Lösung dieser Aufgabe schlägt die Erfindung eine Einrichtung zur Produktflußeinstellung für eine Abfüllwaage mit den Merkmale des Anspruchs 1 vor. Weiterbildungen sind Gegenstand der Unteransprüche.

Die Ausbildung der Schieberwand als Teil eines Drehschiebers macht es möglich, die Lagerung und damit die Verstellmöglichkeit leichtgängig und gegen Verschmutzung und Ablagerung unempfindlich auszugestalten. Gleichzeitig werden aufgrund der Veränderbarkeit des Winkels zwischen Schieberwand bei der Verstellung die Produktflußeigenschaften verbessert, so daß mit der von der Erfindung vorgeschlagenen Abfüllwaage größere stabile Produktschichthöhen gefahren werden können.

Zum Verstellen der Schieberwand kann erfindungsgemäß ein Antrieb vorgesehen sein, um die Verstellung leichter zu gestalten. Hierbei kann es sich beispielsweise um ein Handrad handeln.

Es ist jedoch ebenfalls möglich und wird von der Erfindung vorgeschlagen, daß der Antrieb einen Stellzylinder aufweist, der automatisch ansteuerbar ist. Es wird auf diese Weise eine Automatisierung der Schieberverstellung ermöglicht bzw. vereinfacht.

Der Stellzylinder kann beispielsweise als elektromotorischer Hubspindelantrieb ausgebildet sein oder aber auch als Pneumatikzylinder, Hydraulikzylinder oder dergleichen. Es kann auch ein anderer Antrieb verwendet werden, der auf den Drehschieber einwirkt. Anstelle einer aufwendigen Linearführung kann ein verschmutzungsunempfindliches Drehlager verwendet werden. Der Drehschieber läßt sich relativ einfach durch Blattfedern abdichten.

Erfindungsgemäß kann vorgesehen sein, daß die Achse des Drehschiebers auf der von der festen Wand abgewandten Seite der Schieberwand angeordnet ist und dort von einer Welle oder auch von Drehzapfen gebildet ist. Damit liegt die Drehlagerung des Drehschiebers an einer Stelle, wo sie dem Produktfluß nicht ausgesetzt ist.

Erfindungsgemäß kann in Weiterbildung vorgesehen sein, daß der Drehschieber zusätzlich zu der Schieberwand einen sich unmittelbar an die Schieberwand anschließenden Wandabschnitt aufweist, der auf einem Kreiszylinderabschnitt liegt, dessen Achse mit der Drehachse zusammenfällt. Bei Verschwenken des Schiebers bewegt sich dieser Wandabschnitt also in einem Zylinderabschnitt, also auf festem Radius. Es ist daher sehr einfach möglich, diesen Teil des Drehschiebers abzudichten, so daß auch an dieser Stelle eine Abdichtung gegenüber Verschmutzung oder Beeinflussung durch das abzufüllende Produkt gewährleistet ist.

Bei Abfüllwagen sind, meistens im Anschluß an die Einrichtung zur Einstellung des Produktflusses, Absperrklappen angeordnet, mit denen der Produktstrom unterbrochen wird, wenn die für einen Abfüllvorgang erforderliche Menge des Produktes erreicht ist. Um ein genaues Abfüllgewicht zu erreichen, ist es üblich, den Gesamtproduktfluß in einen Grobfluß und einen Feinfluß zu unterteilen, die jeweils mit einer eigenen Absperrklappe versehen sein können.

Stellt die Waage nach Unterbrechen des Produktflusses fest, daß das Sollgewicht noch nicht erreicht ist, so muß eine kleine Menge des Produktes nachgefüllt werden. Hierzu ist es üblich, die Feinabsperrklappe mehrfach kurzzeitig zu öffnen, bis das Nenngewicht erreicht ist. Dieses kurzzeitige Öffnen geschieht mit Hilfe eines Druckzylinders zum Öffnen der Feinabsperrklappe. Es läßt sich jedoch nicht exakt reproduzieren, da bei gleicher Ansteuerungszeit des Ventils das Öffnen der Klappe durch den Zylinder aufgrund unterschiedlicher Randbedingungen, beispielsweise Pneumatikdruck, Umgebungstemperatur, Verschmutzung und Verschleiß der Bauelemente, der Öffnungswinkel der Feinabsperrklappe stark streuen kann.

Zur Verbesserung dieser Situation ist erfindungsgemäß in Weiterbildung vorgesehen, daß zum Öffnen und Schließen der Absperrklappe, insbesondere der Feinabsperrklappe, ein Element verwendet wird, das ein produzierbares, nur teilweises Öffnen der Absperrklappe ermöglicht. Zum Nachdosieren wird es auf diese Weise möglich, die Absperrklappe oder auch die Feinabsperrklappe nur teilweise zu öffnen, so daß nur kleine Mengen des nachzudosierenden Gutes durch die Öffnung hindurchgelangen können. Auf diese Weise kann eine exakte Nachdosierung erfolgen. Hierzu können geeignete Antriebe verwendet werden.

In weiterer Ausgestaltung schlägt die Erfindung einen Antrieb vor, bei dem zwei Stellzylinder in ihrer Wirkung hintereinander geschaltet sind. Insbesondere können die Zylinder auch mechanisch hintereinander angeordnet und einzeln ansteuerbar sein. Man kann daher beispielsweise im normalen Dosierbetrieb beide Zylinder ansteuern, so daß sie sich in ihrer Wirkung addieren. Zum Nachdosieren kann dann beispielsweise nur einer der beiden Zylinder angesteuert werden, beispielsweise ein Zylinder mit kleinem Hub. Bei Zylindern mit kleinem Hub führen Änderungen der Rahmenbedingungen nur zu kleinen Streuungen des Öffnungswinkels. Selbstverständlich ist es auch möglich, den beiden Zylindern unterschiedliche Öffnungscharakteristika oder Steuerungscharakteristika zu geben, so daß auf diese Weise ebenfalls eine Verbesserung der Dosiergenauigkeit erreicht werden kann.

Es wird also bei der Produktnachgabe zum Nachdosieren vorzugsweise nur der Zylinder mit dem kleineren Hub angesteuert, der die Feinabsperrklappe definiert öffnet und auf diese Weise den Nachgabefluß in genauerer Weise freigibt.

Weitere Merkmale, Einzelheiten und Vorzüge der Erfindung ergeben sich aus der folgenden Beschreibung einer bevorzugten Ausführungsform sowie anhand der Zeichnung. Hierbei zeigen:
- Fig. 1: eine schematische Übersicht über eine Abfüllwaage;
- Fig. 2: in vergrößertem Maßstab einen Drehschieber zur Produktflußeinstellung;
- Fig. 3: in ebenfalls vergrößertem Maßstab eine Betätigungseinrichtung für eine Feinabsperrklappe.

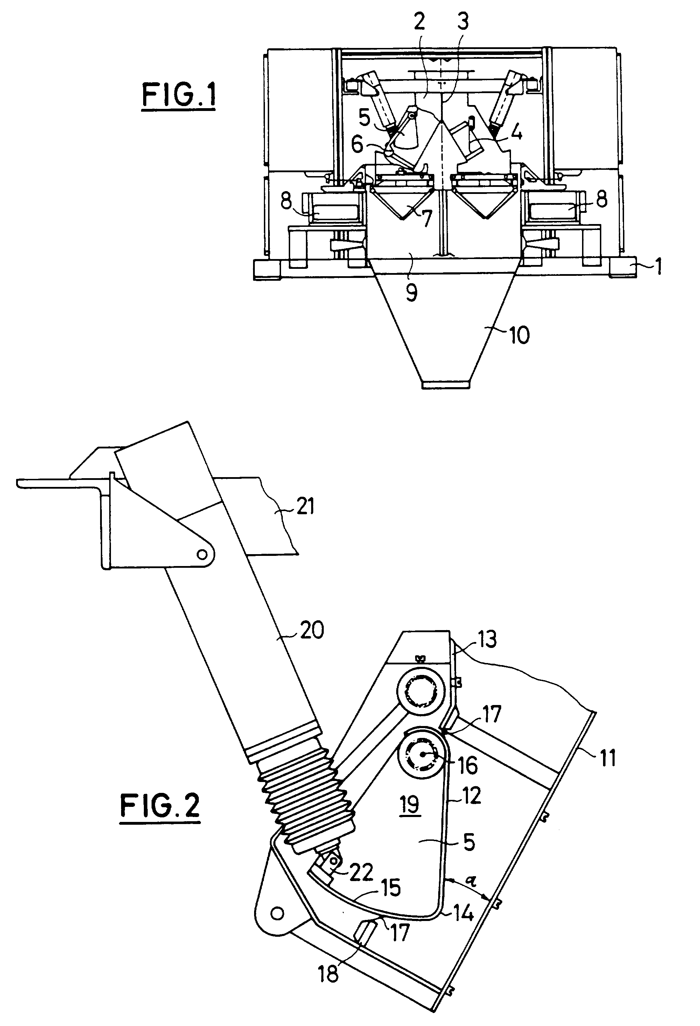

Fig. 1 zeigt zunächst in einer Übersichtszeichnung schematisch eine Abfüllwaage. Die Abfüllwaage enthält einen Maschinenrahmen 1, an dem die verschiedenen Einzelteile angeordnet sind. Das zu wiegende und abzufüllende Produkt wird durch einen Zuführschacht 2 zugeführt. Der Zuführschacht ist in der Mitte durch eine Trennwand 3 getrennt. Er führt zu zwei Dosiereinrichtungen 4, in denen jeweils ein Drehschieber 5 zur Einstellung des Produktflusses und daran anschließend eine Absperrklappe 6 zum Unterbrechen des Produktstroms angeordnet sind. Unterhalb der Absperrklappe befindet sich jeweils die Lastschale 7 für die nur angedeutete Wägeeinrichtung 8. Das abgewogene Produkt wird dann über einen Auslaufkasten 9 in einen Auslauftrichter 10 gegeben, von wo aus es in die Verpackung fällt.

Fig. 2 zeigt nur in vergrößertem Maßstab Einzelheiten der Dosiereinrichtungen 4. Dabei zeigt die Fig. 2 den Drehschieber 5 zur Produktflußeinstellung. Das Produkt wird zwischen einer feststehenden Wand 11, die in dem dargestellten Beispiel eben verläuft, und einer gegenüberliegenden Wand 12 hindurchgeführt, die Teil des Drehschiebers 5 ist. Die Schieberwand 12 verläuft schräg gegenüber der feststehenden Wand 11. Oberhalb des Drehschiebers 5 ist eine ebenfalls schräg gegenüber der feststehenden Wand 11 verlaufende Trichterwand 13 angeordnet, die den Produktstrom vor der Dosiereinrichtung begrenzt. In ihrem unteren Bereich ist die Schieberwand 12 von einer abgerundeten Kante 14 begrenzt, die gleichzeitig die Stelle des geringsten Abstandes der Schiebewand 12 von der feststehenden Wand 11 bildet. Dieser Abstand definiert zusammen mit der quer zur Zeichnungsebene gemessenen Quererstreckung den Querschnitt für den Produktstrom. An die abgerundete Kante 14 schließt sich ein Wandabschnitt 15 an, der Teil eines Kreiszylinders ist.

Der Drehschieber ist um eine Achse 16 verschwenkbar, die auf der der feststehenden Wand 11 abgewandten Seite der Schieberwand 12 angeordnet ist. Die Lagerung kann mit Hilfe einer durchgehenden Welle oder auch mit Hilfe von Lagerzapfen geschehen. Die Schieberwand 12 ist in ihrem oberen Bereich um die Lagerachse 16 herumgezogen, so daß unanhängig von der Stellung des Schiebers diese Lagerung gegenüber dem Produktstrom geschützt ist. Zusätzlich ist an dem der Schieberwand 12 zugeordneten Ende der Trichterwand 13 eine Blattfeder 17 befestigt, die den kleinen Spalt zwischen der Trichterwand 13 und dem Drehschieber 5 abdeckt und abdichtet.

Bei Verschwenkung des Drehschiebers 5 bewegt sich der untere Wandabschnitt 15 auf einem Kreisbogen um die Drehachse 16. Daher kann auch dieser Bereich des Drehschiebers mit Hilfe einer an einem Querträger 18 befestigten Blattfeder 17 abgedichtet werden.

Der Drehschieber 5 weist im Bereich seiner Stirnseiten Stirnbleche 19 auf, die etwa die Form von Kreissektoren haben.

Zur Verschwenkung des Drehschiebers dient ein Stellzylinder 20, der einerseits an einem Teil 21 des Maschinenrahmens 1 und andererseits an einem Ansatz 22 des Drehschiebers 5 angelenkt ist. Der Ansatz 22 ist auf der Innenseite des gebogenen Wandabschnittes 15 angeordnet, so daß auch er in einem gegenüber dem Produktstrom abgedichteten Bereich liegt. Dieser Stellzylinder kann beispielsweise einen elektromotorischen Hubspindelantrieb aufweisen.

Je weiter der Drehschieber 5 geöffnet wird, desto kleiner wird der Winkel zwischen der festen Wand 11 und der Schieberwand 12. Dadurch wird gerade bei großen Produktschichthöhen eine große Stabilität erreicht.

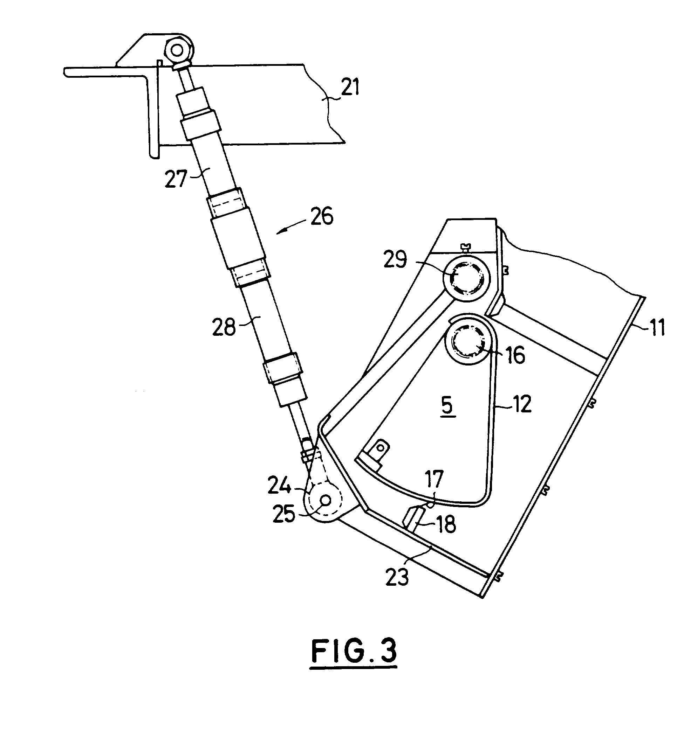

Fig. 3 zeigt einen Ausschnitt aus dem gleichen Teil der Abfüllwaage wie Fig. 2, jedoch ist hier der Stellzylinder 20 für den Drehschieber weggelassen, da in Fig. 3 die Betätigung der Feinabsperrklappe 23 dargestellt werden soll. Die Feinabsperrklappe 23 sperrt den Produktstrom unmittelbar hinter dem Schieber zur Produktflußeinstellung ab. Die im folgenden noch zu beschreibende Art der Betätigung der Feinabsperrklappe 23 kann auch bei Abfüllwaagen Verwendung finden, bei denen der Schieber zur Produktflußeinstellung anders aufgebaut ist als in der hier speziell unter Bezugnahme auf Fig. 2 beschriebenen Art und Weise.

Die Absperrklappe 23 weist im Querschnitt etwa die Form eines L auf, wobei in geschlossenem Zustand der Absperrklappe 23 der untere Schenkel des L als durchgehendes Blech etwas senkrecht zur Fläche der festen Wand 11 verläuft. An der Außenseite der Feinabsperrklappe 23 ist eine Lasche 24 mit einer Öse 25 befestigt, beispielsweise angeschraubt. An dieser Öse ist ein Ende eines Linearantriebs 26 angelenkt, dessen anderes Ende an dem Maschinenteil 21 angelenkt ist. Der Linearantrieb weist in gegenseitiger axialer Verlängerung zwei Druckzylinder 27, 28 auf, die beide unabhängig voneinander angesteuert werden können. Zum Öffnen der Feinabsperrklappe 23 während des normalen Dosierens werden beide Druckzylinder 27, 28 zu ihrer gemeinsamen Verkürzung beaufschlagt, was zu einer Verschwenkung der Feinabsperrklappe 23 um die Schwenkachse 29 führt. Diese Schwenkachse 29 ist oberhalb der Drehachse 16 für den Drehschieber 5 angeordnet.

Soll nun zum Nachdosieren nur eine kleine Menge von abzufüllendem Produkt abgegeben werden, so wird durch Betätigen nur eines der beiden Druckzylinder, beispielsweise des kürzeren Druckzylinders 27, die Absperrklappe 23 nur um einen geringen Betrag geschwenkt. Dementsprechend gelangt nur eine kleine Menge des Produktes in die unter den Dosiereinrichtungen befindliche eigentliche Wägeeinrichtung. Aufgrund des nur kürzeren Hubs ist diese Öffnungsbewegung und damit Nachdosiermöglichkeit wesentlich genauer, als es durch das Ansteuern des gesamten Linearantriebs 26 mit Hilfe beider Zylinder geschehen könnte.

Bei der in Fig. 3 dargestellten Ausführungsform wird ein Antrieb verwendet, der zwei hintereinander geschaltete Druckmittelzylinder aufweist. Es sind selbstverständlich auch andere Antriebe zu diesem Zweck verwendbar, die auch nicht unbedingt Linearantriebe sein müssen. So ist es beispielsweise auch denkbar, einen Stellzylinder zu verwenden, der alternativ einen großen und einen kleinen Hub aufweisen kann und der so ansteuerbar ist, daß er zum Feindosieren die Absperrklappe nur geringfügig öffnet.

## Patentansprüche

1. Einrichtung zur Produktflußeinstellung für eine Abfüllwaage, enthaltend
1.1 eine feste Wand (11),
1.2 eine dieser gegenüberliegend angeordnete Schieberwand (12), die
1.2.1 schräg gegenüber der festen Wand (11) verläuft,
1.2.2 mit der festen Wand (11) einen Durchgang für das Produkt bildet,
1.2.3 wobei der Querschnitt des Durchgangs von dem Mindestabstand der beiden Wände (11, 12) bestimmt wird,
1.2.4 und wobei die Schieberwand (12) zur Änderung ihres Mindestabstandes von der festen Wand (11) verstellbar ist, wobei
1.3 die Schieberwand (12) Teil eines Drehschiebers (5) ist und
1.4 um eine in ihrem oberen Bereich angeordnete Drehachse (16) verschwenkbar ausgebildet ist.

2. Einrichtung nach Anspruch 1, bei der zum Verstellen der Schieberwand (12) ein Antrieb vorgesehen ist.

3. Einrichtung nach Anspruch 2, bei der der Antrieb einen Stellzylinder (20) aufweist.

4. Einrichtung nach einem der Ansprüche 1 bis 3, bei der die Achse (16) des Drehschiebers (5) auf der der festen Wand (11) abgewandten Seite der Schieberwand (12) angeordnet ist.

5. Einrichtung nach einem der vorhergehenden Ansprüche, bei der der Drehschieber (5) einen auf einem Kreiszylinderbogen um die Drehachse (16) liegenden, in die Schieberwand (12) übergehenden Wandabschnitt (15) aufweist.

6. Einrichtung nach einem der vorhergehenden Ansprüche, mit einer schwenkbaren Absperrklappe (23) zum Absperren des Produktflusses und mit einem Antrieb (26) zum Betätigen der Absperrklappe (23), wobei der Antrieb (26) derart ausgebildet ist, daß er zu einem nur teilweisen Öffnen der Absperrklappe (23) ansteuerbar ist.

7. Einrichtung nach Anspruch 6, bei der der Antrieb (26) von zwei mindestens in ihrer Wirkung hintereinander geschalteten Stellzylindern (27, 28) gebildet wird, die unabhängig voneinander ansteuerbar sind.

8. Einrichtung nach Anspruch 6 oder 7, bei der der teilweise ansteuerbare Antrieb (26) auf eine Feinabsperrklappe (23) einwirkt.

## Claims

1. Device for product flow setting for a filling or emptying balance comprising
1.1 a fixed wall (11),
1.2 a slide valve wall (12) positioned facing the latter and which
1.2.1 is inclined with respect to the fixed wall (11),
1.2.2 forms with said fixed wall (11) a passage for the product,
1.2.3 the passage cross-section being determined by the minimum spacing between the two walls (11, 12),
1.2.4 and in which the slide valve wall (12) is adjustable for varying its minimum spacing from the fixed wall (11), wherein
1.3 the slide valve wall (12) is part of a rotary slide valve (5) and
1.4 is pivoted about a shaft (16) located in its upper area.

2. Device according to claim 1, wherein a drive is provided for adjusting the slide valve wall (12).

3. Device according to claim 2, wherein the drive has an operating cylinder (20).

4. Device according to any one of the claims 1 to 3, wherein the shaft (16) of the rotary slide valve (5) is located on the side of the slide valve wall (12) remote from the fixed wall (11).

5. Device according to any one of the preceding claims, wherein the rotary slide valve (5) has a wall portion (15) passing into the slide valve wall (12) located on a circular cylindrical arc about the shaft (16).

6. Device according to any one of the preceding claims, with a pivotable blocking flap (23) for blocking the product flow and with a drive (26) for operating the blocking flap (23), wherein the drive (26) is constructed in such a way that it is controllable for only a partial opening of the blocking flap (23).

7. Device according to claim 6, wherein the drive (26) is formed by two operating cylinders (27, 28), whereof at least the action is connected in series and which are controllable independently of one another.

8. Device according to claim 6 or 7, wherein the partly controllable drive (26) acts on a fine blocking flap (23).

## Revendications

1. Dispositif pour régler le flux de produit pour une balance d'emballage et de conditionnement, comprenant :
1.1 une paroi fixe (11),
1.2 une paroi coulissante (12) disposée en face de la précédente, qui
1.2.1 s'étend en biais par rapport à la paroi fixe (11),
1.2.2 forme avec la paroi fixe (11) un passage pour le produit,
1.2.3 sachant que la section du passage est déterminée par l'écartement minimal des deux parois (11, 12),
1.2.4 et que la paroi coulissante (12) est mobile pour modifier son écart minimal par rapport à la paroi fixe (11), sachant que
1.3 la paroi coulissante (12) fait partie d'un tiroir rotatif (5) et
1.4 est réalisée de manière à pouvoir pivoter autour d'un axe de rotation (16) situé dans sa partie supérieure.

2. Dispositif selon la revendication 1, qui prévoit un entraînement pour déplacer la paroi coulissante (12).

3. Dispositif selon la revendication 2, dans le cas duquel l'entraînement présente un vérin de réglage (20).

4. Dispositif selon l'une des revendications 1 à 3, dans le cas duquel l'axe (16) du titoir rotatif (5) est situé sur le côté de la paroi coulissante (12) qui est opposé à la paroi fixe (11).

5. Dispositif selon l'une des revendications précédentes, dans le cas duquel le tiroir rotatif (5) présente un segment de paroi (15) situé sur un arc de cercle autour de l'axe de rotation (16) et devenant la paroi coulissante (12).

6. Dispositif selon l'une des revendications précédentes, comprenant un clapet d'arrêt (23) pour stopper le flux de produit et un entraînement (26) pour actionner le clapet d'arrêt (23), l'entraînement (26) étant réalisé de telle manière qu'il peut être mis en marche pour n'ouvrir que partiellement le clapet d'arrêt (23).

7. Dispositif selon la revendication 6, dans le cas duquel l'entraînement (26) est formé par deux vérins de réglage (27, 28) montés l'un à la suite de l'autre au moins du point de vue de leur action, qui peuvent être actionnés indépendamment l'un de l'autre.

8. Dispositif selon la revendication 6 ou 7, dans le cas duquel l'entraînement pouvant être actionné partiellement (26) agit sur un clapet d'arrêt pour dosage fin (23).
